# EUROPEAN PATENT APPLICATION

(11) **EP 2 999 027 A1**
(43) Date of publication of application: **23.03.2016**
(21) Application number: 15186039.2
(22) Date of filing: 21.09.2015
(51) Int. Cl.: H01M 2/10, B60K 1/04, B60R 16/04

(54) **BATTERY INSTALLATION STRUCTURE**

(30) Priority: 22.09.2014 JP 2014192865
(71) Applicant: Toyota Jidosha Kabushiki Kaisha, Toyota-shi, Aichi-ken, 471-8571 (JP)
(72) Inventor: IKEDA, Norimitsu, Aichi-ken, Aichi 471-8571 (JP)
(74) Representative: D Young & Co LLP

(57) **Abstract**

A battery installation structure includes: a battery 20 containing a bottom 21 having a rectangular shape, and a ridge portion 22 at a first end portion of the bottom in a longitudinal direction of the bottom, the ridge portion extending in a predetermined direction perpendicular to the longitudinal direction; a battery tray 30 on which the battery is mounted; and at least two first supports 40 that are provided on the battery tray along the longitudinal direction, and are spaced apart from each other in the predetermined direction, wherein each of the first supports has an inclined portion 42 that is provided closer to the first end portion than to a second end portion of the bottom in the longitudinal direction, the inclined portion having a height that increases toward the first end portion, and the inclined portion supports at least one of the ridge portion and the bottom.

## Description

### BACKGROUND OF THE INVENTION

### 1. Field of the Invention

The invention relates to a battery installation structure.

### 2. Description of Related Art

A battery holding structure having contact portions formed on an upper surface of a battery tray is known (see, for example, Japanese Patent Application Publication No. 2010-285077 (JP 2010-285077 A)). When a battery is mounted on the battery tray, the contact portions contact with a bottom surface of the battery, so as to support the battery

However, when there are differences or variations in the size of the battery, the range of contact of the battery tray with the battery varies depending on the size, which may make it difficult to stably support the battery. Therefore, vibration characteristics of the vehicle body may change, and the vibration and the noise in the vehicle may increase.

### SUMMARY OF THE INVENTION

This invention provides a battery installation structure capable of curbing deterioration of the vibration noise performance in a vehicle, even when there are differences or variations in the size of the battery.

A battery installation structure according to one aspect of the invention includes: a battery containing a bottom having a rectangular shape, and a ridge portion at a first end portion of the bottom in a longitudinal direction of the bottom, the ridge portion extending in a predetermined direction perpendicular to the longitudinal direction; a battery tray on which the battery is mounted; and at least two first supports that are provided on the battery tray along the longitudinal direction, and are spaced apart from each other in the predetermined direction, wherein each of the first supports has an inclined portion that is provided closer to the first end portion than to a second end portion of the bottom in the longitudinal direction, the inclined portion having a height that increases toward the first end portion, and the inclined portion supports at least one of the ridge portion and the bottom.

Even when there are differences or variations in the size of the battery to be installed, the battery installation structure can stably support the battery, and increase of the vibration and noise in the vehicle is curbed.

The battery installation structure according to the above aspect of the invention may further include at least two second supports provided on the battery tray. The second supports may be provided closer to the second end portion than to the first end portion such that the second supports are spaced apart from each other in the predetermined direction, and the second supports may be configured to support the bottom.

With the above arrangement, the battery installation structure can more stably support the battery, and increase of the vibration and noise in the vehicle is further curbed.

In the battery installation structure as described above, the battery may be supported by two first supports as the above-indicated at least two first supports and two second supports as the above-indicated at least two second supports.

In the battery installation structure as described above, the battery tray may be disposed on a side member that extends in a front-rear direction of a vehicle body.

When the battery tray is disposed on the side member that extends in the front-rear direction of the vehicle body, too, increase of the vibration and noise in the vehicle is curbed.

In the battery installation structure according to the above aspect of the invention, the inclined portion may have an inclined surface configured to support the ridge portion.

In the battery installation structure according to the above aspect of the invention, the inclined portion may have an apex configured to support the bottom.

In the battery installation structure as described above, the battery tray may include a circumferential wall that surrounds a peripheral portion of the battery tray, and the inclined surface may reach the circumferential wall, the part of the circumferential wall extending in the predetermined direction, and being closer to the first end portion than to the second end portion.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a side view showing a front portion of a vehicle body including a battery installation structure according to one embodiment of the invention;
FIG. 2 is a plan view showing the battery installation structure according to the embodiment;
FIG. 3 is a cross-sectional view taken along line X-X in FIG. 2;
FIG. 4A is a cross-sectional view showing a support of the battery installation structure according to the embodiment;
FIG. 4B is a front view showing the support of the battery installation structure according to the embodiment;
FIG. 5A is a cross-sectional view showing an inclined portion formed on a rib of the battery installation structure according to the embodiment; and
FIG. 5B is an enlarged schematic view showing the inclined portion formed on the rib of the battery installation structure according to the embodiment.

### DETAILED DESCRIPTION OF EMBODIMENTS

One embodiment of the invention will be described in detail with reference to the drawings. For the purpose of illustration, arrow UP indicated as needed in the drawings represents the upward direction of the vehicle body, and arrow FR represents the front direction of the vehicle body, while arrow RH represents the right direction of the vehicle body. In the following description, when the front-rear, vertical and lateral directions are mentioned without particularly specified, they are supposed to mean the front-rear direction of the vehicle body, the vertical direction of the vehicle body, and the lateral direction of the vehicle body (vehicle width direction), respectively.

For the purpose of illustration, a battery 20 which will be described later is in the shape of a rectangular parallelepiped, and the longitudinal direction of a bottom surface 21 as a bottom of the battery 20 is the front-rear direction of the vehicle body, while the short-side direction of the bottom surface 21 is the vehicle width direction. The "short-side direction" is a direction perpendicular to the longitudinal direction on the bottom surface 21, and may be regarded as "predetermined direction" of the invention. In this embodiment, one end portion of the battery 20 (bottom surface 21) in the longitudinal direction is on the front side of the vehicle body, and the other end portion of the battery 20 (bottom surface 21) in the longitudinal direction is on the rear side of the vehicle body. However, the orientation of the battery 20 in the vehicle body is not limited to this.

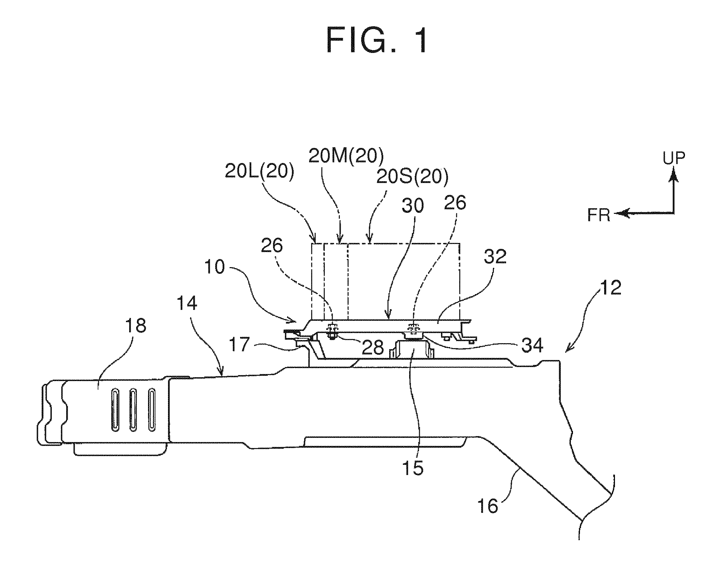

As shown in FIG. 1, a pair of right and left front side members 14 that extend in the front-rear direction of the vehicle body are mounted in a front portion of the vehicle body 12. Each of the front side members 14 has a closed cross-sectional shape, and has a rectangular shape as seen from the front in the front-rear direction of the vehicle body, for example. A rear portion of each of the front side members 14 is formed as a kick-up part 16 that extends downward toward the rear of the vehicle body, and a crush box 18 formed in a closed cross-sectional shape is coaxially mounted to a front end portion of each front side member 14.

A battery tray 30 that constitutes a battery installation structure 10 is mounted on top of one (e.g., the left one) of the right and left front side members 14. As shown in FIG. 1 through FIG. 3, the battery tray 30 on which the battery 20 is mounted and attached is in the form of a flat plate having a generally rectangular shape. A circumferential wall 32 having a given height is erected on a peripheral portion of the battery tray 30. Accordingly, the battery 20 is housed inside the circumferential wall 32.

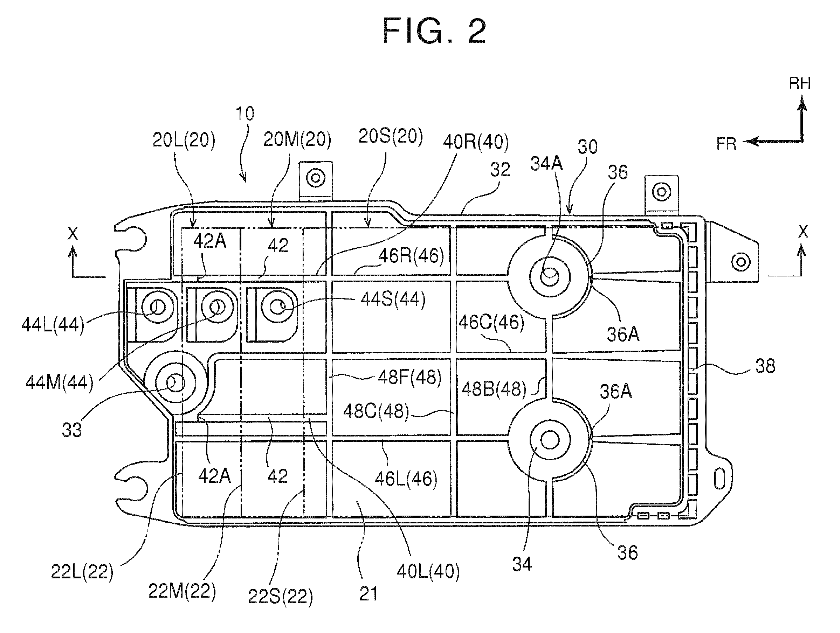

As shown in FIG. 1, a rear portion (between a reinforcing rib 48C (see FIG. 2) which will be described later and a rear end portion) of the battery tray 30 is fastened and fixed to a rear support 15 provided on the upper surface of the front side member 14, and a front end portion of the battery tray 30 is fastened and fixed to a front support 17 provided on the upper surface of the front side member 14. The above-indicated reinforcing rib 48C is provided on a generally central portion of the battery tray 30 in the front-rear direction of the vehicle body to protrude from the central portion and extend along the vehicle width direction.

More specifically, through-holes (not shown) through which bolts 26 (FIG. 1) can be inserted are formed in an upper end portion of the rear support 15 and an upper end portion of the front support 17, and weld nuts (not shown) are fixed, coaxially with the respective through-holes, in the rear support 15 and the front support 17.

On the other hand, two cylindrical bosses 34 that have bottoms and protrude downward of the vehicle body are formed side by side in the vehicle width direction, in the rear portion of the battery tray 30. A through-hole 34A through which the bolt 26 can be inserted is formed through a bottom wall of each of the bosses 34. Also, only one through-hole 33 through which the bolt 26 can be inserted is formed in a front end portion of the battery tray 30, more specifically, in a generally central portion of the front end portion in the vehicle width direction.

Accordingly, the battery tray 30 is placed on the rear support 15 and the front support 17, and the bolts 26 are inserted, from the upper side, through the respective through-holes 34A, 33 of the battery tray 30 and respective through-holes of the rear support 15 and the front support 17, and are threaded into the weld nuts, so that the battery tray 30 is fixed to the upper surface of the left-side front side member 14.

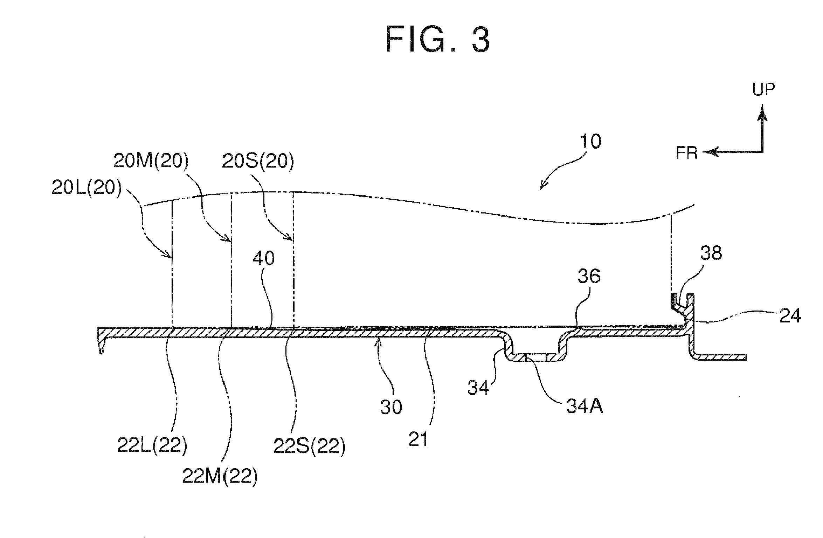

As shown in FIG. 1 through FIG. 3, the battery 20 is in the shape of a rectangular parallelepiped, and an end portion of the bottom surface 21 (bottom) on the front side of the vehicle body (a front-end lower portion of the battery 20) has a corner portion, namely a ridge portion 22 that extends in the vehicle width direction. As shown in FIG. 3, an end portion of the bottom surface 21 of the battery 20 on the rear side of the vehicle body (a rear-end lower portion of the battery 20) has a generally trapezoidal protruding portion 24 that protrudes to the rear side of the vehicle body, in a cross-section as seen in the vehicle width direction,

A rear end portion of the battery tray 30 has an integral, engaging portion 38 with which the protruding portion 24 of the battery 20 is engaged. The engaging portion 38 extends forward and upward of the vehicle body, along the shape of a slope of the protruding portion 24. As shown in FIG. 3, the engaging portion 38 engages with the protruding portion 24 inserted (fitted) from the front side of the vehicle body, so as to prevent the protruding portion 24 from being disengaged upward of the vehicle body.

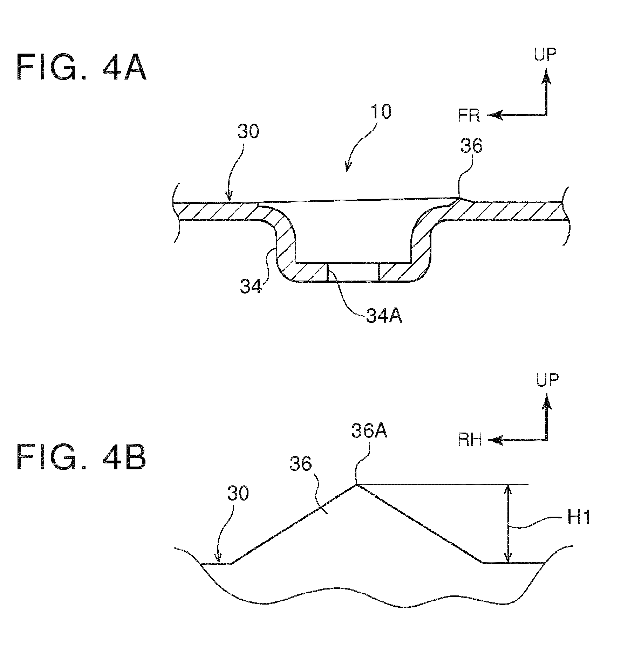

As shown in FIG. 4A, a support 36 that supports the bottom surface 21 in the rear portion of the battery 20, from the downside, is integrally provided in a part of an upper edge portion of each of the bosses 34 located on the rear side of the vehicle body, such that the support 36 protrudes from the upper edge portion. As shown in FIG. 2, each support 36 is a plate-like member that is curved in a semicircular shape in a plan view, along the upper edge portion of the corresponding boss 34. As shown in FIG. 4B, each support 36 is formed in a generally isosceles triangular shape with its apex 36A located in an end portion on the rear side of the vehicle as seen in a front view.

Accordingly, the bottom surface 21 of the rear portion of the battery 20 is supported by the apexes 36A of the supports 36 (at two points spaced apart from each other in the vehicle width direction), in a condition where the protruding portion 24 is engaged with the engaging portions 38 of the battery tray 30. The bottom surface 21 of the rear portion of the battery 20 is supported by the apexes 36A of the supports 36, even if the size of the battery 20 varies, as will be described later. Also, the height H1 of the support 36 up to the apex 36A as shown in FIG. 4B is, for example, 0.8mm.

As shown in FIG. 2, a pair of right and left ribs 40 that extend in the front-rear direction of the vehicle body are integrally formed on the front portion of the battery tray 30 to protrude therefrom. The right and left ribs 40 will be denoted as 40R and 40L, respectively, when they are discriminated from each other in the following description. The ribs 40 may be regarded as the first supports of the invention.

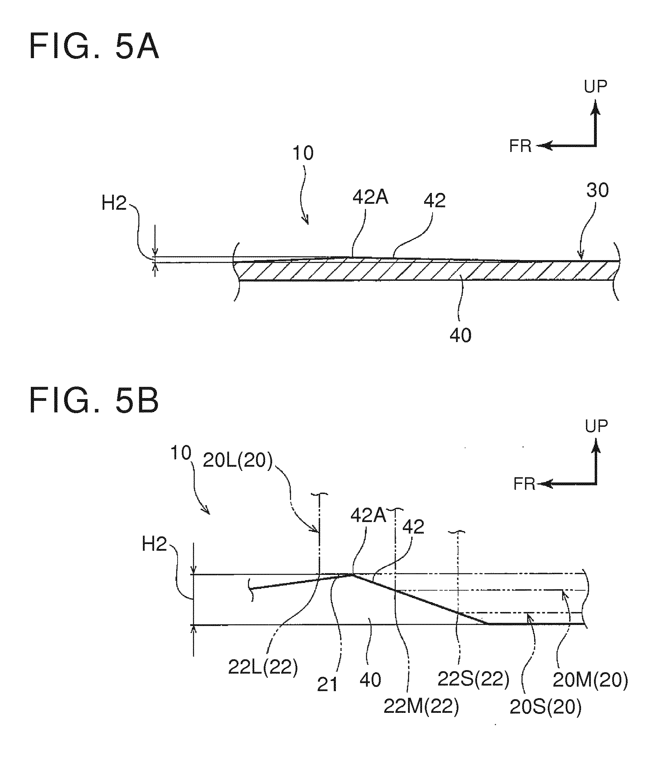

Each of the ribs 40 is a plate-like member having a given height and a thickness as measured in the vehicle width direction, and an inclined portion 42 whose height increases toward the front side of the vehicle body is formed on the front portion of the rib 40, as shown in FIG. 5B. On the vehicle front side of the inclined portion 42, the height of the rib 40 decreases toward the front side of the vehicle body. Namely, the inclined portion 42 formed on each rib 40 has an apex 42A in its front end portion.

The height H2 of the inclined portion 42 up to the apex 42A as shown in FIG. 5B is, for example, 0.8mm. Depending on the size (length as measured in the vehicle front-rear direction) of the battery 20, the ridge portion 22 in the vehicle-front-side end portion of the battery 20 is supported by the inclined portions 42, or the bottom surface 21 in the vicinity of the vehicle-front-side end portion is supported by the apexes 42A as front end portions of the inclined portions 42.

Also, as shown in FIG. 2, through-holes 44 for fastening and fixing a retaining bracket (not shown) provided on a front end portion of the battery 20 are formed in the battery tray 30 in the vicinity of one (for example, the right-side one) of the right and left ribs 40R. Namely, the retaining bracket is formed with a through-hole (not shown) through which the bolt 26 can be inserted.

Accordingly, when there are three sizes, namely, large size, middle size and small size (which will be denoted as "L", "M", and "S", respectively, when attached to the reference numerals in the drawings), as the size of battery 20, three through-holes 44 corresponding to the through-holes of the respective retaining brackets are formed in line in the front-rear direction of the vehicle body. A weld nut 28 (see FIG. 1) is secured in advance to the lower surface of each through-hole 44.

Also, the above-indicated through-hole 33 for fastening and fixing the battery tray 30 to the front side member 14 is formed in the vicinity of the inclined portion 42 (apex 42A) on the other (e.g., the left-side one) of the right and left ribs 40L. More specifically, the through-hole 33 is formed between the inclined portion 42 (apex 42A) of the left rib 40L, and each of the through-holes 44L, 44M used for mounting the large-sized battery 20L and the middle-sized battery 20M.

While at least two ribs 40 (40L, 40R) as a pair of right and left ribs are required to be provided integrally on the battery tray 30 to protrude therefrom, two or more (e.g., three) reinforcing ribs 46 that extend in the front-rear direction of the vehicle body (with its thickness measured in the vehicle width direction) may be provided integrally on the battery tray 30 so as to protrude therefrom, such that the ribs 46 are spaced at given intervals in the vehicle width direction. For example, as shown in FIG. 2, a reinforcing rib 46R may be provided by extending the rib 40R toward the rear side of the vehicle body, and reinforcing ribs 46L, 46C may be provided integrally on the outer side of the rib 40L in the vehicle width direction and a generally central portion of the battery tray 30 in the vehicle width direction respectively, so as to protrude therefrom.

Also, two or more (e.g., three) reinforcing ribs 48 that extend in the vehicle width direction (the front-rear direction of the vehicle body is regarded as the thickness direction of the ribs 48) may be provided integrally on the battery tray 30 to protrude therefrom, such that the ribs 48 are spaced at given intervals in the front-rear direction of the vehicle body. For example, as shown in FIG. 2, reinforcing ribs 48F, 48C, 48B may be provided integrally on the battery tray 30, such that the rib 48F is located so as to pass rear end portions of the ribs 40 (40R, 40L), the rib 48C is located on a generally central portion of the battery tray 30 in the front-rear direction of the vehicle body, and such that the rib 48B is located so as to pass center portions (axes) of the bosses 34.

The operation of the battery tray 30 (battery installation structure 10) constructed as described above will be described below.

When a small-sized battery 20S is mounted on the battery tray 30, the protruding portion 24 of the battery 20S is initially engaged with the engaging portion 38 of the battery tray 30. Then, the bottom surface 21 of the rear portion of the battery 20S is placed on the apexes 36A of the supports 36, while the ridge portion 22S on the vehicle-front-side end portion of the battery 20S is placed on the inclined portions 42 of the ribs 40, and the retaining bracket is fastened and fixed to the battery tray 30. In this manner, the small-sized battery 20S is mounted while being supported at four points on the battery tray 30. The supports 36 may be regarded as the second supports of the invention.

Similarly, when a middle-sized battery 20M is mounted on the battery tray 30, the protruding portion 24 of the battery 20M is initially engaged with the engaging portion 38 of the battery tray 30. Then, the bottom surface 21 of the rear portion of the battery 20M is placed on the apexes 36A of the supports 36, while the ridge portion 22M on the vehicle-front-side end portion of the battery 20M is placed on the inclined portions 42 of the ribs 40, and the retaining bracket is fastened and fixed to the battery tray 30. In this manner, the middle-sized battery 20M is mounted while being supported at four points on the battery tray 30.

On the other hand, when a large-sized battery 20L is mounted on the battery tray 30, the protruding portion 24 of the battery 20L is initially engaged with the engaging portion 38 of the battery tray 30. Then, the bottom surface 21 of the rear portion of the battery 20L is placed on the apexes 36A of the supports 36, while a part of the bottom surface 21 near the vehicle-front-side end portion of the battery 20L is placed on the apexes 42A as front end portions of the inclined portions 42 of the ribs 40, and the retaining bracket is fastened and fixed to the battery tray 30. In this manner, the large-sized battery 20L is mounted while being supported at four points on the battery tray 30.

Thus, the battery 20 is mounted while being supported at four points on the battery tray 30, irrespective of its size (the length as measured in the front-rear direction of the vehicle body). Namely, the battery 20 is stably supported on the battery tray 30 even if the size of the battery 20 differs. Accordingly, vibration characteristics of the vehicle body 12 are less likely or unlikely to change due to differences in the size of the battery 20, and increase of the vibration and noise in the vehicle can be curbed.

Also, the supports 36 (apexes 36A) and the inclined portions 42 (including the apexes 42A) are formed in the vicinity of portions of the battery tray 30 which are fastened to the front side member 14, namely, in the vicinity of the through-holes 34A and the through-hole 33, respectively. In this connection, the rigidity of the portions of the battery tray 30 fastened to the front side member 14 is higher than that of the other portions.

Accordingly, if the supports 36 and inclined portions 42 that support the battery 20 are formed in the vicinity of the fastened portions, the rigidity of the supports 36 and inclined portions 42 can be improved. Consequently, the battery 20 is efficiently supported by the front side member 14, via the battery tray 30, and vibrations in the front side member 14 can be effectively suppressed or reduced.

While at least two supports 36 and at least two inclined portions 42 are required to be provided, it is desirable that the battery 20 is supported at four points. If the battery 20 is supported at three points, it is difficult to stably support the battery 20. If the battery 20 is supported at five points or more, the battery 20 can be stably supported, but it becomes more difficult to curb or reduce changes in the vibration characteristics of the vehicle body 12 due to differences in the size of the battery 20.

Accordingly, it is desirable that the battery 20 is supported at a total of four points, namely, two supports 36 (apexes 36A) and two inclined portions 42 (including apexes 42A). Thus, in the battery installation structure 10 on the front side member 14, changes in the vibration characteristics of the vehicle body 12 can be effectively curbed, and deterioration of the vibration noise performance in the vehicle can be effectively curbed.

While the battery installation structure 10 according to this embodiment has been described with reference to the drawings, the battery installation structure of the invention is not limited to the one illustrated in the drawings, but its design may be changed as needed, within a range that does not depart from the principle of the invention. For example, the positions and numbers of the reinforcing ribs 46, 48 formed on the battery tray 30 are not limited to those illustrated in the drawings.

The size of the battery 20 is not limited to the three types as illustrated. Further, the supports 36 may be provided integrally on the vehicle front side of the upper edge portions of the respective bosses 34, rather than the vehicle rear side of the upper edge portions of the bosses 34. It is, however, to be noted that the battery 20 can be more stably supported if the four points at which the battery 20 is supported are spaced from each other as far as possible in the vehicle front-rear direction and the vehicle width direction.

The supports 36 are not necessarily provided on the upper edge portions of the bosses 34 to protrude therefrom, but may be formed as apexes (not shown) similar to the apexes 42A of the inclined portions 42, on the ribs 46R, 46L in the vicinity of the respective bosses 34, for example. Also, the battery tray 30 is not necessarily fixed to the front side member 14, but may be fixed to a rear side member, or other vehicle framework members (not shown), for example.

The inclined portion 42 may not have the apex 42A, but may have an inclined surface whose height increases toward one longitudinal end portion of the battery tray, and which reaches a front portion of the circumferential wall 32.

## Claims

1. A battery installation structure **characterized by** comprising:
a battery (20) including a bottom (21) having a rectangular shape, and a ridge portion (22) at a first end portion of the bottom in a longitudinal direction of the bottom, the ridge portion extending in a predetermined direction perpendicular to the longitudinal direction;
a battery tray (30) on which the battery is mounted; and
at least two first supports (40) that are provided on the battery tray along the longitudinal direction, and are spaced apart from each other in the predetermined direction, wherein
each of the first supports has an inclined portion (42) that is provided closer to the first end portion than to a second end portion of the bottom in the longitudinal direction, the inclined portion having a height that increases toward the first end portion, and
the inclined portion supports at least one of the ridge portion and the bottom.

2. The battery installation structure according to claim 1, further comprising at least two second supports (36) provided on the battery tray, wherein
the second supports are provided closer to the second end portion than to the first end portion, such that the second supports are spaced apart from each other in the predetermined direction, the second supports being configured to support the bottom.

3. The battery installation structure according to claim 2, wherein
the battery is supported by two said first supports and two said second supports.

4. The battery installation structure according to any one of claims 1 to 3, wherein the battery tray is disposed on a side member that extends in a front-rear direction of a vehicle body.

5. The battery installation structure according to any one of claims 1 to 4, wherein the inclined portion has an inclined surface configured to support the ridge portion.

6. The battery installation structure according to any one of claims 1 to 5, wherein the inclined portion has an apex (42A) configured to support the bottom.

7. The battery installation structure according to claim 5, wherein:
the battery tray includes a circumferential wall (32) that surrounds a peripheral portion of the battery tray; and
the inclined surface reaches a part of the circumferential wall, the part of the circumferential wall extending in the predetermined direction, and being closer to the first end portion than to the second end portion.
